# EUROPEAN PATENT APPLICATION

(11) **EP 1 712 532 A1**
(43) Date of publication of application: **18.10.2006**
(21) Application number: 05703745.9
(22) Date of filing: 18.01.2005
(51) Int. Cl.: C04B 35/26

(54) **METHOD FOR PRODUCING FERRITE SINTERED COMPACT**

(30) Priority: 28.01.2004 JP 2004019343
(71) Applicant: TDK Corporation, Chuo-ku, Tokyo 103-8272 (JP)
(72) Inventor: MINACHI, Yoshihiko, TDK Corporation, Tokyo 1038272 (JP); NAGAOKA, Junichi, TDK Corporation, Tokyo 1038272 (JP); MURASE, Taku, TDK Corporation, Tokyo 1038272 (JP); ITO, Noboru, TDK Corporation, Tokyo 1038272 (JP); KURASAWA, Syunsuke, TDK Corporation, Tokyo 1038272 (JP); UMEDA, Hidenobu, TDK Corporation, Tokyo 1038272 (JP)
(74) Representative: Hoffmann, Klaus
(86) International application number: PCT/JP2005/000508
(87) International publication number: WO 2005/073147

(57) **Abstract**

There is provided a process for producing W-type ferrite having high magnetic properties by reducing compacting defects during wet compacting. Specifically, there is a provided a process for producing a ferrite sintered body having a main composition of the following formula (1):

AFe²⁺ₐFe³⁺_{b}O₂₇ (1)

wherein 1.
5 ≤ a ≤ 2.1, 14 ≤ a+b ≤ 18.5, and A is at least one element selected from Sr, Ba and Pb, the process comprising:
a calcining step of obtaining a calcined body from a raw material compound; a first milling step of milling the calcined body to a predetermined size; a heat treatment step of holding fine powder obtained from the first milling step for a predetermined time in a predetermined temperature range in an atmosphere having an oxygen concentration of 10% by volume or less; a second milling step of milling the fine powder which has undergone the heat treatment step to a predetermined size; a step of wet compacting the fine powder which has undergone the second milling step in a magnetic field; and a sintering step of sintering the compacted body obtained by the wet compacting.

## Description

### Technical Field

The present invention relates to a process for producing a ferrite sintered body, and in particular, to a process for producing a W-type ferrite sintered body which can attain high magnetic properties.

### Background Art

W-type ferrite magnets are drawing attention as having the potential to exhibit magnetic properties that are far superior to M-type ferrite magnets. For example, Patent Document 1 discloses that a W-type ferrite can be provided easily and inexpensively by blending SrCO₃ and Fe₂O₃ so that "n" in the composition formula SrO·2(FeO)·n(Fe₂O₃) is between 7.2 and 7.7, adding C (carbon) to this blended raw material powder, calcining the resulting powder, adding CaO, SiO₂ and C (carbon) to the calcined product, then milling the resulting substance to a mean particle size of 0.06 µm or less, compacting the milled powder in a magnetic field, and sintering the compacted powder in a non-oxidative atmosphere.

Patent Document 1 discloses that if the mean particle size of the milled powder prior to compacting exceeds 0.06 µm, coercive force decreases, yet if the mean particle size is too small, residual magnetic flux density decreases. Patent Document 1 accordingly suggests that the mean particle size of the milled powder prior to compacting is preferably between 0.04 and 0.06 µm. Patent Document 1 states that a ball mill or attritor is suitable for the milling.

Patent Document 1:
Japanese Patent Laid-Open No. 9-260124

### Disclosure of the Invention

### Problems to be Solved by the Invention

According to investigations conducted by the present inventors, although from the perspective of magnetic properties it is preferable to set the mean particle size of the milled powder in a range between 0.04 and 0.06 µm, difficulties were observed in the production process. Namely, it was learned that the range of between 0.04 and 0.06 µm for the mean particle size means that the particles are too fine, which causes problems such as water releasability deterioration when wet compacting in a magnetic field is being conducted, whereby compacting becomes impossible; or cracks and fissures are formed in the compacted body. Further, if the milling is carried out with a ball mill or attritor, while the mean particle size can be controlled to be within the above range of between 0.04 to 0.06 µm, in reality particles having a size of less than 0.04 µm are formed, whereby water releasability deterioration in the wet compacting become pronounced.

The present invention has been achieved in view of these technical problems. Accordingly, it is an object of the present invention to provide a process for producing W-type ferrite having high magnetic properties by the reduction of compacting defects during wet compacting which result from the particles being too fine.

### Means for Solving the Problems

The present inventors have conducted studies to eliminate ultrafine particles, or reducing the amount of ultrafine particles, by causing the ultrafine particles to grow, either by reacting ultrafine particles formed from milling, for example, which have a particle size of 0.04 µm or less with each other, or by reacting ultrafine particles with fine particles having a particle size of more than 0.04 µm. The reaction of ultrafine particles with each other can be achieved by a heat treating process wherein milled powder is held at a predetermined temperature. However, in the case of W-type ferrite, care needs to be given to the fact that the Fe²⁺ formed from calcination needs to be maintained even after undergoing such a heat treatment. That is, if the above heat treatment is conducted in an oxidative atmosphere, Fe²⁺ is eliminated or the amount of Fe²⁺ decreases, whereby the magnetic properties of the obtained W-type ferrite sintered body deteriorate. In view of this, the present invention is a process for producing a ferrite sintered body having a main composition of the following formula (1)

AFe²⁺ₐFe³⁺_{b}O₂₇ (1)

wherein 1.5 ≤ a ≤ 2.1, 14 ≤ a+b ≤ 18.5, and A is at least one element selected from Sr, Ba and Pb, the process comprising: a calcining step of obtaining a calcined body from a raw material compound; a first milling step of milling the calcined body to a predetermined size; a heat treatment step of holding fine powder obtained from the first milling step for a predetermined time in a predetermined temperature range in an atmosphere having an oxygen concentration of 10% by volume or less; a second milling step of milling the fine powder which has undergone the heat treatment step to a predetermined size; a step of wet compacting the fine powder which has undergone the second milling step in a magnetic field; and a sintering step of sintering the compacted body obtained by the wet compacting.

The W-type ferrite sintered body obtained according to the present invention is not limited to a single phase consisting of W-phase, wherein the sintered body may comprise 50% or more of W-phase in terms of molar ratio.

In the above-described heat treatment step, it is preferable for the heat treatment to be carried out for a predetermined time in a temperature range of 600 to 1,200°C.

Further, it is preferable for the milling conditions for the second milling step to be more relaxed than the milling conditions for the first milling step.

Still further, in the present invention, it is preferable for the fine powder which has undergone the first milling step and the fine powder which has undergone the second milling step to have a mean particle size of between 0.08 and 0.8 µm. It is more preferable for this mean particle size to be between 0.1 and 0.2 µm.

In the present invention, it is preferable that a carbon-containing material, carbon powder for instance, is added after performing the calcining step but prior to conducting the second milling step.

As described above, it is an object of the present invention to cause ultrafine powder to grow without eliminating the Fe²⁺ formed from the calcining step. The present invention, therefore, provides a process for producing a ferrite sintered body comprising: a first milling step of milling a calcined body comprising Fe²⁺ and Fe³⁺ into a milled powder of between 0.08 and 0.8 µm; a particle growth step of reacting some of particles constituting the milled powder with each other while maintaining the Fe²⁺ and Fe³⁺ to grow the particles; and a second milling step of milling the milled powder having

The undergone the particle growth step to between 0.08 and 0.8 µm. particle growth step in the present invention is preferably carried out under a non-oxidative atmosphere in order to maintain the Fe²⁺ and Fe³⁺.

The present invention makes it possible to produce W-type ferrite with high magnetic properties and to reduce compacting defects during wet compacting.

### Brief Description of the Drawings

Figure 1 is a table illustrating the relationship between heat treatment conditions and magnetic properties for the sintered bodies prepared in Example 1;
Figure 2 is a table illustrating the relationship between oxygen concentration during heat treatment and magnetic properties for the sintered bodies prepared in Example 2; and
Figure 3 is a table illustrating the relationship between heat treatment conditions and magnetic properties for the sintered bodies prepared in Example 3.

### Best Mode for Carrying Out the Invention

The present invention will now be described in more detail based on the following embodiments.

### Composition

The present invention is directed to a ferrite sintered body, and in particular to a W-type ferrite sintered body. Well known compositions can be broadly applied as the composition for this sintered body, although those having a main composition comprising the following formula (1) are preferable.

AFe²⁺ₐFe³⁺_{b}O₂₇ (1)

(wherein 1.5 ≤ a ≤ 2.1; 14 ≤ a+b ≤ 18.5; and A is at least one element selected from Sr, Ba and Pb.) In the formula (1), reference characters "a" and "b" each represent molar ratio.

In the above formula (1), "a" denotes the ratio of Fe²⁺, and is set as 1.5 ≤ a ≤ 2.1. If "a" is less than 1.5, M-phase and Fe₂O₃ (hematite) phase, whose saturation magnetization (4πIs) is lower than that of W-phase, are formed, whereby saturation magnetization (4πIs) decreases. On the other hand, if "a" exceeds 2.1, spinel phase is formed, and coercive force (HcJ) decreases. Therefore, "a" is set in the range of 1.5 to 2.1. A preferable range for "a" is between 1.6 and 2.1, and a more preferable range is between 1.6 and 2.0.

Further, "a+b" denotes the ratio of Fe²⁺ and Fe³⁺, and is set as 14 ≤ a+b ≤ 18.5. If "a+b" is less than 14, spinel phase is formed, and coercive force (HcJ) decreases. On the other hand, if "a+b" exceeds 18.5, M-phase and Fe₂O₃ (hematite) phase are formed, whereby saturation magnetization (4πIs) decreases. Therefore, "a+b" is set in the range of 14 ≤ a+b ≤ 18.5. A preferable range for "a+b" is between 14 and 18, and a more preferable range for "a+b" is between 14 and 17.

The composition of the ferrite sintered body can be determined by fluorescent X-ray quantitative analysis or similar technique. The present invention does not exclude a ferrite sintered body comprising elements other than the "A" element (at least one element selected from Sr, Ba and Pb) and Fe.

The ferrite sintered body according to the present invention can be produced by undergoing a mixing step, a calcining step, a pulverizing step, a milling step, a compacting step in a magnetic field, and a sintering step.

Here, the present invention is characterized in that the milling step is divided into a first milling step and a second milling step, and a heat treatment step being carried out between the first milling step and the second milling step.

Each of these steps will now be explained below.

### Mixing Step

After weighing out each raw material, a blending and milling treatment is carried out for about 1 to 3 hours using a wet attritor or similar apparatus. As the raw material powders, oxides or compounds which will turn into an oxide upon sintering, can be used. While an example will be explained below which uses SrCO₃ powder, BaCO₃ powder and Fe₂O₃ (hematite) powder, the A element can be added in carbonate form, as well as being added as an oxide. The same can be said for Fe, so that compounds other than Fe₂O₃ can be added. Moreover, compounds comprising the A element and Fe can also be used.

### Calcining Step

The blended powder material obtained from the mixing step is calcined at between 1100 and 1350°C. By carrying out this calcining step in a non-oxidative atmosphere such as nitrogen gas or argon gas, Fe³⁺ in the Fe₂O₃ (hematite) powder is reduced to Fe²⁺, whereby W-type ferrite is formed. However, if at this stage the amount of Fe²⁺ cannot be sufficiently secured, M phase or H phase (hematite) will be present in addition to W phase. To obtain W single phase ferrite, it is effective to regulate the oxygen partial pressure. This is because if the oxygen partial pressure is lowered, Fe²⁺ is formed from the reduction of Fe³⁺.

### Pulverizing Step

Since the calcined body is generally granular, it is preferable that the calcined body is disintegrated by pulverizing. In the pulverizing step, pulverizing is carried out using a vibration mill or the like until the mean particle size is from 0.5 to 10 µm.

### First Milling Step

In the first milling step, the pulverized powder is wet or dry milled using an attritor, ball mill, jet mill or the like to a mean particle size of 0.08 to 0.8 µm, preferably 0.1 to 0.4 µm, and more preferably 0.1 to 0.2 µm. This first milling step is carried out to eliminate the coarse powder and to make the microstructure of sintered body fine in order to improve magnetic properties. The specific surface area (according to the BET method) is preferably in the range of 20 to 25 m²/g. Here, ultrafine particles having a mean particle size of 0.05 µm or less are contained in the milled powder obtained in the first milling step. If there is a large amount of such ultrafine particles, compactionability is adversely affected, as will be discussed below. If the specific surface area (according to the BET method) is in the range of 20 to 25 m²/g, ultrafine particles are present in an amount which can adversely affect compactionability.

While it depends on the milling method, if the pulverized powder undergoes wet milling with a ball mill, milling can be performed for between 60 and 100 hours per 200 g of pulverized powder.

In order to improve coercive force or adjust grain size, powders of CaCO₃ and SiO₂, or in addition to them, powders of SrCO₃, BaCO₃, Al₂O₃, Cr₂O₃, or the like can be added prior to the first milling step.

### Heat Treatment Step

A large quantity of ultrafine particles of 0.05 µm or less is formed from the first milling step. However, if ultrafine particles are present, problems will occur in the following compacting step in a magnetic field. For example, if there is a large quantity of ultrafine particles during wet compacting, water releasability is poor, which causes problems such that compacting becomes unable to be performed. In view of this, in the present embodiment heat treatment is carried out prior to the compacting step in a magnetic field. That is, this heat treatment is carried out for the purpose of eliminating ultrafine particles or decreasing the amount of ultrafine particles by reacting ultrafine particles of 0.05 µm or less formed during the first milling step with each other, or by reacting ultrafine particles with fine particles having a size greater than the ultrafine particles (e.g. a size of 0.08 to 0.8 µm).

In the heat treatment step, it is preferable to hold the milled powder in a temperature range of between 600 and 1,200°C. If the temperature is less than 600°C, the reaction between particles does not proceed adequately, while if the temperature is more than 1,200°C the reaction between particles becomes over-vigorous, whereby the growth of the particles is more than that required. A preferable heat treatment temperature is from 700 to 1,000°C. The heat treatment time may be selected as appropriate in a range of between 1 second and 100 hours, although a preferable heat treatment time is from 1 second to 10 hours, and a more preferable heat treatment time is from 1 second to 5 hours.

To avoid the Fe²⁺ formed by calcination being oxidized to Fe³⁺, the heat treatment atmosphere in this step is a non-oxidative atmosphere. "Non-oxidative atmosphere" as used in the present invention includes inert gas atmospheres such as nitrogen gas, argon gas and the like. It is acceptable for the non-oxidative atmosphere according to the present invention to comprise 10% by volume or less of oxygen. This level of oxygen amount is such that the oxidation of Fe²⁺ during heat treatment at the above temperature can be ignored. The oxygen amount in the heat treatment atmosphere is preferably 1% by volume or less, and more preferably 0.1% by volume or less.

### Second Milling Step

In the subsequent second milling step, the milled powder which has undergone heat treatment is wet or dry milled using an attritor, ball mill, jet mill or the like to a mean particle size of 0.8 µm or less, preferably 0.1 to 0.4 µm, and more preferably 0.1 to 0.2 µm. This second milling step is carried out for particle size regulation, necking removal, and improvement in additive dispersion. The specific surface area (according to the BET method) is preferably in the range of 10 to 20 m²/g, and more preferably 10 to 15 m²/g. If the specific surface area is regulated within this range, even if ultrafine particle is present, it is only in a small amount that does not adversely impact on compactionability. That is, by undergoing the first milling step, the heat treatment step and the second milling step, the requirements of not adversely affecting compactionability and of making the microstructure of sintered body finer can be satisfied.

While it depends on the milling method, in the case of wet milling with a ball mill, milling can be performed for between 10 and 40 hours per 200 g of milled powder. The milling conditions in the second milling step are usually relaxed from those of the first milling step, due to the fact that if the second milling step employs generally the same milling conditions as those of the first milling step, ultrafine powder will again be formed, and the fact that the desired particle size has already been basically attained in the first milling step. Here, whether the milling conditions are relaxed does not depend on the milling time, and can be determined based on the mechanical energy introduced during milling.

In order to improve coercive force or adjust grain size, powders of CaCO₃ and SiO₂, or in addition to them, powders of Al₂O₃, Cr₂O₃ or the like can be added prior to the second milling step.

Carbon powder, which exhibits a reduction effect in the sintering step, can be added prior to this second milling step. The addition of carbon powder is effective in forming W-type ferrite in a near-single phase (or a single phase). Here, the additive amount of carbon powder (hereinafter "carbon amount") is in a range of 0.05 to 0.7% by weight with respect to the raw material powder. By setting the carbon amount in this range, not only can the effects as a carbon powder reductant in the below-described sintering step be sufficiently enjoyed, but a saturation magnetization (σs) higher than the case where a carbon powder had not been added can be obtained. A preferable carbon amount according to the present invention is from 0.1 to 0.65% by weight, and a more preferable carbon amount is from 0.15 to 0.6% by weight. As the carbon powder to be added, well-known substances such as carbon black can be used.

In the present invention, to suppress the added carbon powder from segregating in the compacted body, it is preferable to add a polyhydric alcohol represented by the general formula Cₙ(OH)ₙHₙ₊₂.

The carbon number "n" in the above general formula is 4 or more. If the carbon number "n" is 3 or less, the effects of suppressing segregation of the carbon powder are insufficient. A preferable value for the carbon number "n" is between 4 and 100, more preferable is between 4 and 30, still more preferable is between 4 and 20, and much more preferable is between 4 and 12. Two or more polyhydric alcohols may be used together. Moreover, in addition to the polyhydric alcohol used in the present invention, other well-known dispersants may also be used.

The above-described general formula is a formula showing a case where the skeleton is entirely linear and no unsaturated bonds are included. The number of hydroxyl groups and hydrogen groups in the polyhydric alcohol may be somewhat less than the numbers represented in the general formula. In the above-described general formula, not only saturated bonds, but unsaturated bonds may also be included. While the basic skeleton may be linear or cyclic, linear is preferable. Although the effects of the present invention will be manifested if the number of hydroxyl groups is 50% or more of the carbon number "n", a larger number of hydroxyl groups is preferable. Most preferable is where the number of hydroxyl groups and the carbon number match. The additive amount of the polyhydric alcohol is from 0.05 to 5.0% by weight with respect to the powder to be loaded therewith, preferably from 0.1 to 3.0% by weight, and more preferable is from 0.3 to 2.0% by weight. Most of the added polyhydric alcohol is broken down and removed in the step of heat-treating compacted body carried out after the compacting step in a magnetic field. Any remaining polyhydric alcohol that was not broken down and removed during the step of heat-treating compacted body is broken down and removed in the subsequent sintering step.

### Compacting Step in a Magnetic Field

The compacting step in a magnetic field can be conducted either by dry compacting or by wet compacting. However, to increase the degree of magnetic orientation, it is preferable to conduct by wet compacting. Therefore, the preparation of a slurry for wet compacting will be explained below, and then the compacting step in a magnetic field will be explained.

In the case of employing wet compacting, the second milling step is carried out by wet milling, and the obtained slurry is concentrated to prepare the slurry for wet compacting. The concentrating can be carried out by centrifugal separation or using a filter press, for instance. During this stage, the ferrite magnet powder preferably makes up from 30 to 80% by weight of the slurry for wet compacting. Further, it is preferred to add gluconic acid (salt), sorbitol or other such surfactant to the water used as the dispersion medium.

Next, the slurry for wet compacting is subjected to compacting in a magnetic field. The compacting pressure may be set between approximately 0.1 and 0.5 ton/cm², and the applied magnetic field may be set between approximately 5 and 15 kOe. As a dispersion medium, not only water but also non-aqueous media may be used. When a non-aqueous dispersion medium is used, organic solvents such as toluene or xylene can be used. When toluene or xylene is used as a non-aqueous dispersion medium, surfactants such as oleic acid are preferably added.

### Sintering Step

In the subsequent sintering step, the compacted body undergoes sintering by being retained at a temperature between 1100°C and 1270°C, and more preferably between 1160°C and 1240°C, for 0.5 to 3 hours. Such sintering is carried out in a non-oxidative atmosphere for the same reason as mentioned in the calcining step. Further, in this step the carbon powder added prior to the second milling step is eliminated.

By undergoing the above steps, the W-type ferrite sintered body according to the present invention can be obtained. Such a W-type ferrite sintered body can attain a residual magnetic flux density (Br) of 4,500 G or more, or even 4,600 G or more. Further, a coercive force (HcJ) of 3,000 Oe or more, or even 3,600 Oe or more can be attained.

As explained above, by dividing the milling step into a first milling step and a second milling step, and by performing a heat treatment step in between the first milling step and the second milling step, a W-type ferrite sintered body exhibiting high magnetic properties can be obtained.

### Example 1

The present invention will now be explained based on the following specific working examples.

First, Fe₂O₃ powder (primary particle size of 0.3 µm), SrCO₃ powder (primary particle size of 2 µm), and BaCO₃ powder (primary particle size of 0.05 µm) were prepared as raw material powders. The raw material powders were weighed out, and then mixed by milling for 2 hours with a wet attritor.

Next, calcining was conducted using a tubular furnace under conditions of a 1 hour holding time in a N₂ gas atmosphere. The heating and holding temperature was set to 1,300°C, and the rate at which the heating and holding temperature rose and fell was set at 5°C per minute.

This was then followed by pulverizing with a vibration mill. The pulverizing using a vibration mill was carried out for 10 minutes per 220 g of calcined body.

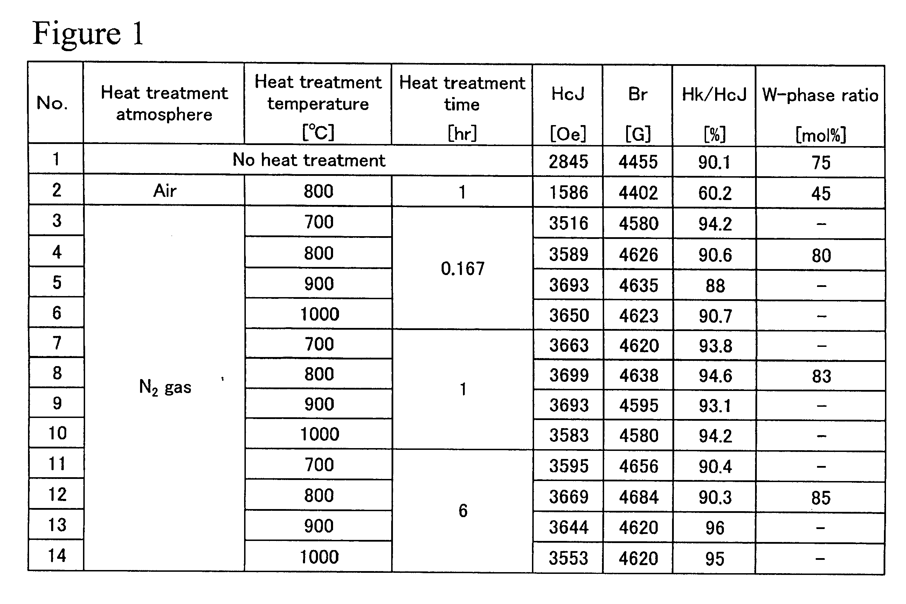

The subsequent milling was conducted in two stages using a ball mill. The first milling was carried out by adding 400 ml of water per 210 g of pulverized powder and milling for 88 hours. However, for the example illustrated by No. 1 in Figure 1, milling was carried out for 40 hours (specific surface area (as measured by the BET method) was 13.5 m²/g). The mean particle size at this stage was 0.65 µm for No. 1, and 0.18 µm for Nos. 2 to 14.

After the first milling the milled powder was heat treated in a N₂ gas atmosphere by holding for 10 minutes (0.167 hours), 1 hour and 6 hours at 700°C, 800°C, 900°C and 1,000°C. The rate at which the heating and holding temperature rose and fell was set at 5°C per minute. Subsequently, the second milling was conducted by wet milling with a ball mill, to thereby obtain a slurry for wet compacting. The conditions in this second milling were adjusted so that the specific surface area (according to the BET method) of the milled powder after the second milling was from 13 to 14 m²/g. During the second milling, 0.6% by weight of SiO₂ powder (primary particle size: 0.01 µm), 0.7% by weight of CaCO₃ powder (primary particle size: 1 µm), 0.35% by weight of SrCO₃ powder (primary particle size: 2 µm), 1.4% by weight of BaCO₃ powder (primary particle size: 0.05 µm), and 0.4% by weight of carbon powder (primary particle size: 0.05 µm), as well as 1.2% by weight of sorbitol (primary particle size: 10 µm) as a polyhydric alcohol, were added to the milled powder which had undergone the above-described first milling and heat treatment.

The slurry resulting from the second milling was concentrated in a centrifugal separator to prepare a concentrated slurry for wet compacting. This slurry for wet compacting was then subjected to compacting in a magnetic field. The applied magnetic field (vertical magnetic field) was 12 kOe (1,000 kA/m), and the resulting compacted body had a cylindrical shape with a diameter of 30 mm and a height of 15 mm. No defects were found in any of the formed compacted bodies. The compacted body was subjected to a heat treatment by retaining in air at 300°C for 3 hours. The resulting body was then sintered in nitrogen at a temperature rising rate of 5°C/minute at a maximum temperature of 1,190°C for 1 hour, so as to obtain a sintered body. The composition of the obtained sintered body was determined to have a Sr:Ba ratio of 0.66:0.34, with "a" being 1.7 and "a+b" being 15.52 in the above composition formula (1). The composition analysis was carried out using an X-ray fluorescence analyzer SIMULTIX 3550 manufactured by Rigaku Corporation.

Next, the coercive force (HcJ), residual magnetic flux density (Br) and the squareness (Hk/HcJ) of the obtained sintered body were determined. Coercive force (HcJ) and residual magnetic flux density (Br) were evaluated by processing the top and bottom surfaces of the obtained sintered body, and then using a B-H tracer having a maximum applied magnetic field of 25 kOe. Hk indicates the external magnetic field strength at the point where magnetic flux density is 90% of residual magnetic flux density (Br) in the second quadrant of the magnetic hysteresis loop. If Hk is low, a high maximum energy product cannot be achieved. Hk/HcJ acts as an index for magnet performance, representing the degree of squareness in the second quadrant of the magnetic hysteresis loop.

The results are shown in Figure 1. Figure 1 also shows the measured results for a sintered body obtained in the same manner as described above, except that the milling step was not devided into first and second stages; as well as those for a sintered body obtained in the same manner as described above, except that the heat treatment conducted between the first milling and second milling was carried out in air (oxygen concentration of 20% by volume). The specific surface area (BET value of 13 to 14 m²/g) after the second milling for the above examples was made to match each other, and the mean particle size was 0.293 µm for No. 1 and between 0.1 and 0.2 µm for Nos. 2 to 14. Thus, the difference in mean particle sizes was due to the milling time in the first milling being longer for Nos. 2 to 14.

It can be seen from Figure 1 that coercive force (HcJ) did not reach 3,000 Oe unless a heat treatment was carried out between the first milling and the second milling. This is because mean particle size becomes larger if a heat treatment is not carried out between the first milling and the second milling, despite the fact that specific surface area (according to the BET method) of the powder which had undergone second milling with no heat treatment between the first milling and the second milling being identical with the specific surface area of the powder that was subjected to a heat treatment between the first milling and the second milling. It can also be seen that even if a heat treatment was carried out between the first milling and the second milling, if air (oxygen concentration of 20% by volume) is used as the heat treatment atmosphere, coercive force (HcJ) and squareness (Hk/HcJ) are decreased, even more so than when a heat treatment was not carried out between the first milling and the second milling. This is because of the decrease in the ratio of W-phase present in the sintered body as a result of Fe²⁺ being oxidized to Fe³⁺ by the heat treatment.

In contrast to the above, if the heat treatment between the first milling and the second milling was conducted in a nitrogen gas atmosphere, a W-type ferrite sintered body is obtainable having excellent magnetic properties such that coercive force (HcJ) is 3,000 Oe or greater, residual magnetic flux density (Br) is 4,500 G or grater and squareness (Hk/HcJ) is 85% or greater. Regarding the temperature for the heat treatment, magnetic properties were better with a temperature of 800 and 900°C. Regarding the length of time for the heat treatment, about 1 hour is sufficient, based on the fact that the sintered body held for 1 hour had the same magnetic properties as the sintered body held for 6 hours.

The phases for several of the above sintered bodies were identified using an X-ray diffractometer. These results are shown in Figure 1, and confirm that the W-phase ratio in the sintered bodies obtained by heat treating in air was lower than that for the other sintered bodies. The conditions for the X-ray diffractometer were as noted below. In addition, the molar ratio in the examples was calculated by blending powder samples of W-type ferrite, M-type ferrite, hematite, and spinel in a given ratio, and then performing a comparative calculation based on the X-ray diffraction intensities.
X-ray generator: 3 kW
Tube voltage: 45 kV
Tube current: 40 mA
Sampling width: 0.02 deg
Scanning speed: 4.00 deg/min
Divergence slit: 1.00 deg
Scattering slit: 1.00 deg
Receiving slit: 0.30 mm

### Example 2

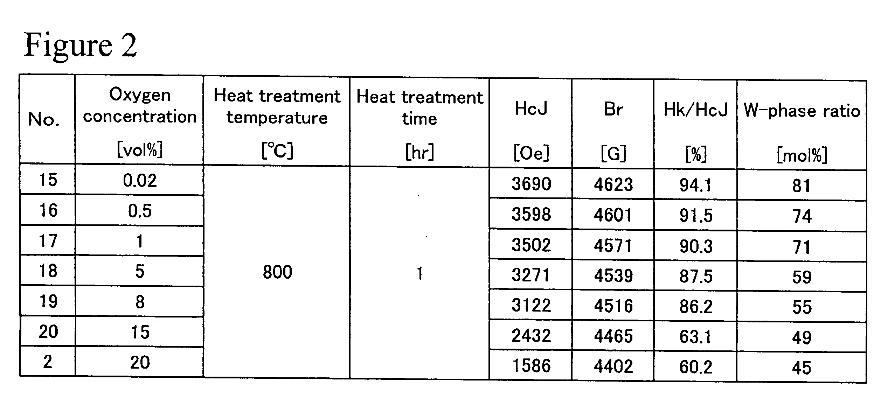

Sintered bodies (Sample Nos. 15 to 20) were produced under the same conditions as for Sample No. 8, except that the oxygen concentration during heat treatment was set as given in Figure 2. The oxygen concentration during heat treatment was varied by blending atmospheric gas and nitrogen gas.

The coercive force (HcJ), residual magnetic flux density (Br) and squareness (Hk/HcJ) of the obtained sintered bodies were determined in the same manner as in Example 1. Further, the phases for each of the sintered bodies were identified using an X-ray diffractometer. These results are shown in Figure 2. For ease of comparison, the magnetic properties and W-phase molar ratio for Sample No. 2, which underwent heat treatment in air (oxygen concentration of 20% by volume), is also shown in Figure 2.

Figure 2 shows that the ratio of W-phase increases as the oxygen concentration decreases, whereby high magnetic properties were attained. Particularly for the Samples Nos. 15 to 19, wherein the oxygen concentration was 10% by volume or less, show coercive force (HcJ) of 3,000 Oe or greater, residual magnetic flux density (Br) of 4,500 G or grater and squareness (Hk/HcJ) of 85% or greater at the same time.

### Example 3

Sintered bodies were produced under the same conditions as for Example 1, except that the mixing ratio of the raw material powders was varied. The composition of the obtained sintered bodies was as follows. Composition X:

In the above composition formula (1), Sr:Ba was 0.60:0.40, "a" was 1.6 and "a+b" was 14.1.

### Composition Y:

In the above composition formula (1), Sr:Ba was 0.70:0.30, "a" was 2.0 and "a+b" was 18.4.

### Composition Z:

In the above composition formula (1), Sr:Ba was 1.00:0, "a" was 1.7 and "a+b" was 16.4.

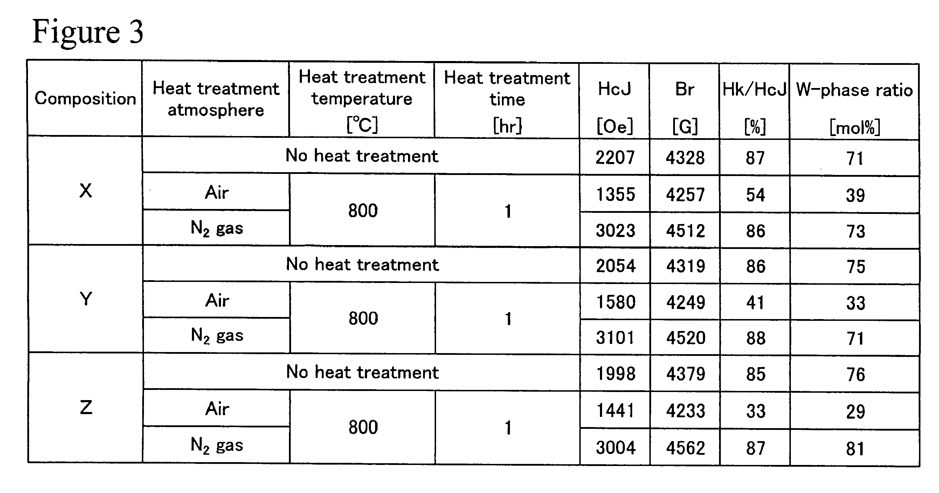

The coercive force (HcJ), residual magnetic flux density (Br) and squareness (Hk/HcJ) of the obtained sintered bodies were determined under the same conditions as in Example 1. Further, the phases for each of the sintered bodies were identified using an X-ray diffractometer. These results are shown in Figure 3.

Figure 3 confirms the same trend as in Example 1, even when the composition was varied within a range recommended by the present invention.

## Claims

1. A process for producing a ferrite sintered body having a main composition of the following formula (1):
AFe²⁺ₐFe³⁺_{b}O₂₇ (1)
wherein 1.5 ≤ a ≤ 2.1, 14 ≤ a+b ≤ 18.5, and A is at least one element selected from Sr, Ba and Pb, the process comprising:
a calcining step of obtaining a calcined body from a raw material compound;
a first milling step of milling the calcined body to a predetermined size;
a heat treatment step of holding fine powder obtained from the first milling step for a predetermined time in a predetermined temperature range in an atmosphere having an oxygen concentration of 10% by volume or less;
a second milling step of milling the fine powder which has undergone the heat treatment step to a predetermined size;
a step of wet compacting the fine powder which has undergone the second milling step in a magnetic field; and
a sintering step of sintering the compacted body obtained by the wet compacting.

2. The process for producing a ferrite sintered body according to claim 1, wherein the heat treatment step is carried out in a temperature range of 600 to 1,200°C.

3. The process for producing a ferrite sintered body according to claim 1, wherein the heat treatment step is carried out in a temperature range of 700 to 1,000°C.

4. The process for producing a ferrite sintered body according to claim 1, wherein the predetermined time is between 1 second and 10 hours.

5. The process for producing a ferrite sintered body according to claim 1, wherein the oxygen concentration is 1% by volume or less.

6. The process for producing a ferrite sintered body according to claim 1, wherein the atmosphere is a nitrogen gas atmosphere.

7. The process for producing a ferrite sintered body according to claim 1, wherein the milling conditions for the second milling step are more relaxed than the milling conditions for the first milling step.

8. The process for producing a ferrite sintered body according to claim 1, wherein the fine powder which has undergone the first milling step and the fine powder which has undergone the second milling step have a mean particle size of between 0.08 and 0.8 µm.

9. The process for producing a ferrite sintered body according to claim 8, wherein the mean particle size is between 0.1 and 0.2 µm.

10. The process for producing a ferrite sintered body according to claim 1, wherein a carbon-containing material is added after performing the calcining step but prior to conducting the wet compacting.

11. The process for producing a ferrite sintered body according to claim 1, wherein during the heat treatment step ultrafine particles of 0.05 µm or less are eliminated or decreased.

12. A process for producing a ferrite sintered body comprising:
a first milling step of milling a calcined body in which Fe²⁺ and Fe³⁺ are formed into a milled powder having a mean particle size of between 0.08 and 0.8 µm;
a particle growth step of reacting some of particles constituting the milled powder with each other while maintaining the Fe²⁺ and Fe³⁺ to grow the particles; and
a second milling step of milling the milled powder having undergone the particle growth step to a mean particle size of between 0.08 and 0.8 µm.

13. The process for producing a ferrite sintered body according to claim 12, wherein the particle growth step is carried out under a non-oxidative atmosphere.

14. The process for producing a ferrite sintered body according to claim 1 or 12, wherein the ferrite sintered body is a W-type ferrite sintered body.

15. The process for producing a ferrite sintered body according to claim 14, wherein the ferrite sintered body comprises 50% or more of W-phase in terms of molar ratio.
